# FASCICULE DE BREVET EUROPEEN

(11) **EP 1 870 304 B1**
(45) Date de publication et mention de la délivrance du brevet: **02.12.2009**
(21) Numéro de dépôt: 07109305.8
(22) Date de dépôt: 31.05.2007
(51) Int. Cl.: B60T 8/52, B60T 8/44, B60T 13/02

(54) **Système de freinage pour véhicule automobile comportant un dispositif de sur-assistance au freinage.**
Kraftfahrzeugbremssystem mit einer zusätzlichen Bremskraftverstärkungsvorrichtung.
Braking system for an automotive vehicle comprising a supplementary boosting device.

(30) Priorité: 21.06.2006 FR 0607599
(43) Date de publication de la demande: 26.12.2007
(73) Titulaire: ROBERT BOSCH GMBH, 70442 Stuttgart (DE)
(72) Inventeur: Fourcade, Jean, 77420 Champs sur Marne (FR); Richard, Philippe, 77500 Chelles (FR)
(74) Mandataire: Hurwic, Aleksander Wiktor

(56) Documents cités:
- EP-A1- 0 459 855
- EP-A1- 0 566 133
- WO-A-90/06868
- FR-A- 2 022 955
- US-A- 3 044 580
- US-A- 4 505 351

## Description

La présente invention concerne un système de freinage pour véhicule automobile comportant un dispositif de sur-assistance au freinage.

La présente invention concerne plus particulièrement un système de freinage pour véhicule automobile, du type comportant un organe de commande, tel qu'une pédale de frein, sur lequel le conducteur est susceptible d'appliquer un effort de freinage d'intensité déterminée qui est transmis par l'intermédiaire d'un circuit de freinage aux freins, le circuit de freinage comportant des moyens d'assistance susceptibles d'amplifier au moins l'effort de freinage du conducteur jusqu'à une première intensité correspondant à l'application par les freins d'un effort de freinage assisté de manière à provoquer un ralentissement ou un arrêt du véhicule selon l'intensité de l'effort de freinage, le système de freinage comporte un dispositif, dit "de sur-assistance au freinage", comportant des moyens d'actionnement qui, dans des conditions déterminées, sont susceptibles d'exercer un effort supplémentaire de freinage, dit effort de sur-assistance, sur les moyens d'assistance de manière à obtenir par amplification de l'effort de freinage du conducteur et de l'effort supplémentaire de freinage une deuxième intensité qui est supérieure à la première intensité d'effort de freinage assisté et qui correspond à l'application par les freins d'un effort de freinage sur-assisté.

On connaît de nombreux exemples de systèmes de freinage qui sont susceptibles, selon les applications, de comporter différents types de circuits de freinage tels que décrits dans WO 90/06868A ou EP0566133A1.

La présente invention propose une nouvelle conception de système de freinage qui permette en particulier d'en réduire l'encombrement, le coût et de récupérer l'énergie dissipée dans les freins à disque.

L'invention a principalement pour objet un système de freinage pour véhicule automobile, du type comportant un organe de commande, tel qu'une pédale de frein, sur lequel le conducteur est susceptible d'appliquer un effort de freinage d'intensité déterminée qui est transmis par l'intermédiaire d'un circuit de freinage aux freins, le circuit de freinage comportant des moyens d'assistance susceptibles d'amplifier au moins l'effort de freinage du conducteur jusqu'à une première intensité correspondant à l'application par les freins d'un effort de freinage assisté de manière à provoquer un ralentissement ou un arrêt du véhicule selon l'intensité de l'effort de freinage, le système de freinage comportant un dispositif, dit "de sur-assistance au freinage", comportant des moyens d'actionnement qui, dans des conditions déterminées, sont susceptibles d'exercer un effort supplémentaire de freinage, dit effort de sur-assistance, sur les moyens d'assistance de manière à obtenir par amplification de l'effort de freinage du conducteur et de l'effort supplémentaire de freinage une deuxième intensité qui est supérieure à la première intensité d'effort de freinage assisté et qui correspond à l'application par les freins d'un effort de freinage sur-assisté, caractérisé en ce qu'un dispositif de génération de pression hydraulique comporte des moyens de génération de pression et des moyens associés de stockage d'énergie, tels qu'un accumulateur de pression, et caractérisé en ce que les moyens de génération de pression sont constitués, au moins en partie, par des moyens de récupération d'énergie qui, lorsqu'un effort de freinage est appliqué par les freins, sont destinés à transformer une partie de l'énergie cinétique d'au moins deux des roues du véhicule en énergie hydraulique susceptible d'être stockée dans les moyens de stockage de manière à être utilisée ultérieurement par le dispositif de sur-assistance au freinage.

L'invention a également pour objet un tel système de freinage caractérisé en ce que les moyens d'actionnement du dispositif de sur-assistance exerce l'effort supplémentaire de freinage sur les moyens d'assistance par l'intermédiaire l'organe de commande du système.

L'invention a également pour objet un tel système de freinage caractérisé en ce que le dispositif de sur-assistance au freinage est de type hydraulique et comporte au moins :
- des moyens d'actionnement constitués par au moins un vérin hydraulique comportant une chambre de commande à volume variable qui est délimitée à l'avant par un piston solidaire d'une tige de vérin dont l'extrémité libre arrière est susceptible d'exercer l'effort supplémentaire de sur-assistance au freinage sur l'organe de commande, et
- un dispositif de génération de pression hydraulique destiné à alimenter sélectivement en fluide hydraulique la chambre de commande du vérin d'actionnement.

L'invention a également pour objet un tel système de freinage caractérisé en ce que les moyens de récupération d'énergie comportent, pour chacune des roues, un générateur de pression hydraulique comportant une chambre hydraulique à volume variable qui est délimitée par la paroi interne d'un cylindre et par la face avant d'un piston dont l'extrémité libre arrière est liée en déplacement à l'étrier de frein.

L'invention a également pour objet un tel système de freinage caractérisé en ce que la chambre du générateur de pression hydraulique communique avec les moyens de stockage de l'énergie hydraulique, tel qu'un accumulateur de pression, qui sont destinés à stocker l'énergie hydraulique qui est récupérée, à chaque application d'un effort de freinage, lorsque le piston est déplacé axialement d'une position extrême arrière de repos vers une position extrême avant de travail.

L'invention a également pour objet un tel système de freinage caractérisé en ce que le dispositif de sur-assistance au freinage comporte des moyens de répartition, tel qu'un répartiteur, de l'énergie hydraulique récupérée respectivement sur chacune des roues, qui sont interposés entre les chambres hydrauliques de chaque générateur de pression hydraulique et les moyens de stockage de l'énergie hydraulique.

L'invention a également pour objet un tel système de freinage caractérisé en ce que le dispositif de sur-assistance comporte une première conduite de raccordement des moyens de répartition et des moyens de stockage dans laquelle est interposé un premier clapet anti-retour de manière à autoriser uniquement la circulation du fluide hydraulique des moyens de répartition vers les moyens de stockage.

L'invention a également pour objet un tel système de freinage caractérisé en ce que le dispositif de sur-assistance comporte une seconde conduite de réalimentation en fluide hydraulique dont une extrémité communique avec un réservoir de réalimentation contenant du fluide hydraulique et dont l'autre extrémité est reliée à la première conduite entre le premier clapet anti-retour et les moyens de répartition.

L'invention a également pour objet un tel système de freinage caractérisé en ce que un deuxième clapet anti-retour est interposé dans la seconde conduite de réalimentation de manière à autoriser uniquement la circulation du fluide hydraulique du réservoir de réalimentation vers les moyens de répartition et de récupération.

L'invention a également pour objet un tel système de freinage caractérisé en ce que le dispositif de sur-assistance comporte des moyens de distribution pilotés destinés à réguler la circulation du fluide hydraulique et qui comportent au moins :
- une première électrovanne qui est interposée entre les moyens de stockage et le vérin hydraulique et qui est commandée en ouverture de manière à alimenter en fluide hydraulique la chambre de commande du vérin pour provoquer l'application de
l'effort supplémentaire de sur-assistance au freinage sur l'organe de commande ; et
- une deuxième électrovanne qui est interposée entre la chambre de commande du vérin et le réservoir de réalimentation et qui est commandée en ouverture de manière à, après l'application d'un effort supplémentaire de sur-assistance au freinage, évacuer le fluide hydraulique de la chambre de commande du vérin et rééquilibrer les pressions de fluide hydraulique dans le dispositif hydraulique de sur-assistance.

L'invention a également pour objet un tel système de freinage caractérisé en ce que le dispositif hydraulique de sur-assistance comporte une unité électronique de commande pour piloter, selon des conditions définies, au moins l'ouverture et/ou la fermeture de la première électrovanne et de la deuxième électrovanne.

L'invention a également pour objet un tel système de freinage caractérisé en ce que le dispositif de génération de pression hydraulique comporte au moins une pompe de précharge qui, au moins lors du démarrage du véhicule, est destinée à alimenter en fluide hydraulique les moyens de stockage d'énergie hydraulique de manière à initialiser le dispositif de sur-assistance en y stockant une quantité d'énergie hydraulique suffisante pour permettre l'application d'au moins un effort supplémentaire de sur-assistance au freinage et à garantir la sécurité de fonctionnement du dispositif de sur-assistance du système de freinage du véhicule indépendamment de l'énergie hydraulique susceptible d'être ultérieurement récupérée et stockée par l'intermédiaire des moyens de récupération d'énergie.

L'invention a également pour objet un tel système de freinage caractérisé en ce qu'il comporte un système d'antiblocage de roues et/ou un système de régulation du comportement dynamique, comportant au moins une pompe qui constitue la pompe de précharge des moyens de stockage du dispositif de sur-assistance.

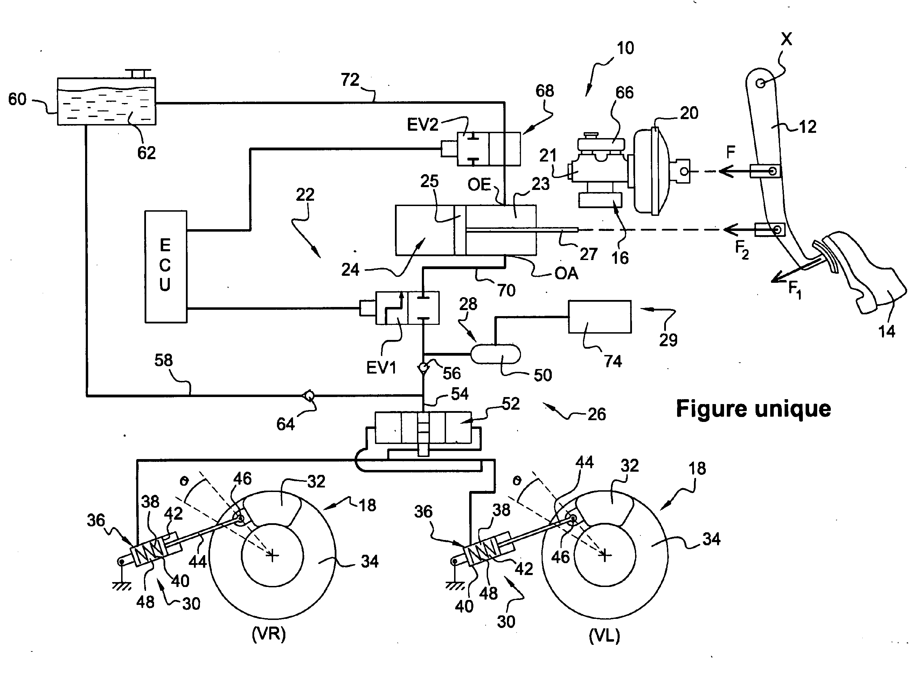

D'autres caractéristiques et avantages de l'invention apparaîtront à la lecture de la description détaillée qui suit pour la compréhension de laquelle on se reportera à la figure unique qui illustre schématiquement un exemple de réalisation d'un système de freinage selon l'invention.

On a représenté sur la figure unique, un système de freinage 10, notamment pour véhicule automobile, comportant un organe de commande 12 constituée par exemple par une pédale de frein sur laquelle le conducteur du véhicule est susceptible d'appliquer un effort de freinage "F1" d'intensité déterminée, dit effort principal de freinage.

L'intensité de l'effort de freinage F1 appliqué musculairement par le pied 14 du conducteur sur la pédale 12 est en effet variable selon que le conducteur souhaite respectivement ralentir ou arrêter un véhicule ou encore le maintenir immobile si celui-ci se trouve déjà à l'arrêt.

L'effort de freinage F1 appliqué par le conducteur est transmis par tout moyen à un circuit de freinage 16 pour actionner des freins 18 équipant le véhicule.

Avantageusement, le circuit de freinage 16 comporte des moyens d'assistance 20 qui sont susceptibles d'amplifier au moins l'effort de freinage F1 du conducteur jusqu'à une première intensité "11" correspondant à l'application par les freins 18 d'un effort de freinage assisté.

De manière connue, le circuit de freinage 16 comporte aussi des moyens de transmission (non représentés) destinés à transmettre l'effort de freinage jusqu'aux freins 18 dont l'actionnement est susceptible de provoquer un ralentissement ou un arrêt du véhicule selon l'intensité de l'effort de freinage.

On connaît de nombreux types de circuit de freinage dans lesquels la transmission de l'effort de freinage se fait en totalité ou en combinaison de manière mécanique, pneumatique, hydraulique ou électrique/électronique.

Dans l'exemple de réalisation représenté sur la figure unique, le circuit de freinage 16 qui est représenté partiellement est avantageusement un circuit de freinage de type hydraulique ou électro-hydraulique.

Un tel circuit de freinage hydraulique 16 comporte conventionnellement des moyens d'assistance qui sont constitués par au moins un servomoteur à dépression 20 qui est destiné à amplifier un effort de freinage "F" exercé en entrée sur une tige de commande du servomoteur et qui correspond conventionnellement à l'effort principal de freinage F1 appliqué par le conducteur sur la pédale de frein 12.

L'effort de freinage "F" ainsi amplifié est alors transmis aux freins 18 généralement par l'intermédiaire d'un maître-cylindre 21, tel qu'un maître-cylindre tandem, et de moyens de transmission associés (non représentés), par exemple des moyens de type hydraulique.

De manière connue, les caractéristiques techniques du servomoteur 20 d'assistance au freinage sont déterminées en fonction du véhicule équipé du système de freinage 10 et doivent notamment permettre au conducteur d'arrêter le véhicule dans des conditions optimales en toutes circonstances.

En effet, les caractéristiques techniques, telles que le diamètre, du servomoteur 20 sont déterminées dans un système de freinage conventionnel de manière à obtenir une intensité maximale d'effort de freinage.

Une telle intensité maximale d'effort de freinage est généralement très supérieure à l'intensité réellement nécessaire pour obtenir, dans les conditions de sécurité requises, le ralentissement ou l'arrêt d'un véhicule circulant par exemple à une vitesse comprise entre 30 à 80 Km/h, soit une vitesse correspondant plutôt à une utilisation en zone urbaine.

En revanche, lorsque le véhicule circule à vitesse plus élevée, par exemple supérieure ou égale à 130 Km/h, il est alors nécessaire que le système applique un effort de freinage d'intensité bien supérieure et pouvant alors atteindre ladite intensité maximale.

Conformément à l'invention, le système de freinage 10 comporte un dispositif 22, dit "de sur-assistance au freinage", comportant des moyens d'actionnement 24 qui, dans des conditions déterminées, sont susceptibles d'exercer un effort supplémentaire de freinage F2, dit effort de sur-assistance, sur les moyens d'assistance 20, 21.

De manière non limitative, l'effort supplémentaire de sur-assistance au freinage F2 est par exemple susceptible d'être appliqué mécaniquement sur la tige de commande du servomoteur à dépression (20) ou encore hydrauliquement sur le maître-cylindre 21

Avantageusement, les moyens d'actionnement 24 du dispositif de sur-assistance 22 exerce l'effort supplémentaire de freinage F2 sur les moyens d'assistance 20 par l'intermédiaire l'organe de commande 12 du système 10.

De préférence, l'effort supplémentaire de sur-assistance au freinage F2 exercé par les moyens d'actionnement 24 du dispositif 22 directement sur l'organe de commande 12 s'ajoute à l'effort principal de freinage F1 déjà exercé par le pied 14 du conducteur.

Par conséquent, l'effort de freinage global appliqué à l'entrée du servomoteur 20 qui est destiné à être amplifié correspond à la somme de l'effort principal de freinage F1 du conducteur et de l'effort supplémentaire de freinage F2 en prenant dûment en compte pour chacun à l'effet de bras de levier s'appliquant par rapport à l'axe de rotation X de la pédale 12.

Ainsi, le dispositif de sur-assistance 22 permet donc, dans des conditions déterminées, d'exercer sélectivement un effort supplémentaire F2 sur la pédale 12 par l'intermédiaire des moyens d'actionnement 24 de manière à obtenir une deuxième intensité I2 de freinage supérieure à la première intensité I1 d'effort de freinage assisté.

La deuxième intensité I2 correspond ainsi à l'application par les freins 18 d'un effort de freinage sur-assisté avec une intensité supérieure ou égale à l'intensité maximale de freinage obtenu avec un système de freinage selon l'état de la technique.

Grâce au dispositif de sur-assistance au freinage 22 selon l'invention, le servomoteur d'assistance 20 est donc susceptible d'être de dimension plus réduite ce qui permet, par rapport à un tel système de freinage conventionnel, de diminuer l'encombrement et le coût de cet organe essentiel du système de freinage 10.

Bien entendu, les moyens d'actionnement 24 du dispositif de sur-assistance au freinage 22 sont susceptibles d'être réalisés par tous moyens appropriés, notamment mécanique, pneumatique, hydraulique ou électrique/électronique ou encore une combinaison de tels moyens.

Selon un exemple de réalisation non représenté, les moyens d'actionnement 24 du dispositif 22 sont par exemple constitués par un moteur électrique susceptible d'entraîner une tige solidaire de la pédale 12 depuis une position de repos jusqu'à une position de travail dans laquelle la tige exerce un effort de traction correspondant à l'effort supplémentaire F2 de sur-assistance au freinage.

Selon un exemple de réalisation préféré de l'invention, le dispositif de sur-assistance au freinage 22 est de préférence un dispositif de type hydraulique ou électro-hydraulique.

Avantageusement, le dispositif de sur-assistance au freinage 22 comporte au moins :
- des moyens d'actionnement constitués par au moins un vérin hydraulique 24 comportant une chambre de commande 23 à volume variable qui est délimitée à l'avant par un piston 25 solidaire d'une tige de vérin 27 dont l'extrémité libre arrière est susceptible d'exercer l'effort supplémentaire de sur-assistance au freinage sur l'organe de commande 12 formé par la pédale, et
- un dispositif de génération de pression hydraulique 26 destiné à alimenter sélectivement en fluide hydraulique la chambre de commande 23 du vérin d'actionnement 24.

Le dispositif de génération de pression hydraulique 26 comporte des moyens de stockage d'énergie 28, tels qu'un accumulateur de pression, qui sont de préférence associés des moyens de génération de pression 29, tels qu'une pompe.

Avantageusement, le dispositif de génération de pression hydraulique 26 du dispositif de sur-assistance 22 est donc susceptible de fournir sélectivement, ici sous forme de fluide hydraulique, l'énergie nécessaire à l'application de l'effort supplémentaire de sur-assistance au freinage F2 permettant d'obtenir l'application d'un effort de freinage sur-assisté par les freins 18 du système de freinage 10.

Les moyens de génération de pression 29 sont constitués, au moins en partie, par des moyens de récupération d'énergie 30 qui, lorsqu'un effort dé freinage est appliqué par les freins 18, sont destinés à transformer une partie de l'énergie cinétique d'au moins deux des roues du véhicule en énergie hydraulique susceptible d'être stockée dans les moyens de stockage 28 de manière à être utilisée ultérieurement par le dispositif de sur-assistance au freinage 22.

De préférence, un frein à disque 18 muni d'un étrier flottant 32 équipe au moins une roue droite et une roue gauche, avant et/ou arrière, du véhicule.

De manière connue, le frein à disque 18 à étrier flottant 32 est susceptible, lors d'un freinage, de solliciter au moins un patin de frein (non représenté) contre un disque de frein 34 pour dissiper au moins une partie de l'énergie cinétique du véhicule en énergie thermique.

Chaque étrier de frein 32 est monté mobile en rotation entre au moins :
- une première position angulaire extrême qu'il occupe lorsque l'étrier de frein 32 n'applique aucun effort de freinage sur le disque de frein 34, et
- une deuxième position angulaire extrême qu'il occupe dès lorsque, un effort de freinage étant appliqué, l'étrier de frein 32 est entraîné par friction par le disque de frein 34.

Avantageusement, les étriers de frein 32 montés mobile équipent les roues avant du véhicule, respectivement la roue avant droite "VR" et la roue avant gauche "VL".

En variante, les étriers de frein 32 équipent les roues arrière du véhicule ou encore les quatre roues.

Les moyens de récupération d'énergie 30 comportent, pour chacune des roues "VR", "VL", un générateur de pression hydraulique 36 comportant une chambre hydraulique 38 à volume variable qui est délimitée par la paroi interne d'un cylindre 40 et par la face avant 42 d'un piston 44.

L'extrémité libre arrière 46 du piston 44 est liée en déplacement à l'étrier de frein 32.

Le piston 44 du générateur de pression hydraulique 36 est monté mobile axialement entre :
- une position extrême arrière, dite de repos, qui correspond à la première position angulaire extrême de l'étrier de frein 32 et vers laquelle le piston 44 est rappelé élastiquement, et
- une position extrême avant, dite de travail, qui correspond à la deuxième position angulaire extrême de l'étrier de frein 32 et vers laquelle le piston 44 est déplacé lorsque, un effort de freinage étant appliqué, l'étrier 32 est entraîné depuis sa première position angulaire extrême jusqu'à sa deuxième position angulaire extrême.

Avantageusement, le piston 44 est rappelé élastiquement vers sa position extrême arrière par l'intermédiaire d'un organe de rappel 48, tel qu'un ressort, qui est monté à l'intérieur de la chambre hydraulique 38 et qui sollicite la face avant 42 du piston 44.

La chambre hydraulique 38 du générateur de pression 36 communique avec les moyens 28 de stockage de l'énergie hydraulique du dispositif 22 de sur-assistance au freinage.

De préférence, les moyens de stockage 28 sont constitués par un accumulateur de pression 50.

L'accumulateur de pression 50 est destiné à stocker l'énergie hydraulique qui est récupérée, à chaque application d'un effort de freinage, lorsque le piston 44 est déplacé axialement de sa position extrême arrière de repos vers sa position extrême avant de travail.

La course axiale du piston 44 entre ses positions extrêmes arrière et avant est déterminée par la valeur de l'angle "θ" correspondant au déplacement angulaire de l'étrier de frein 32 depuis sa première position angulaire extrême jusqu'à sa deuxième position angulaire extrême.

Avantageusement, le dispositif de sur-assistance au freinage 22 comporte des moyens de répartition 52, tel qu'un répartiteur, de l'énergie hydraulique récupérée respectivement sur chacune des roues droite "VR" et gauche "VL".

Les moyens de répartition 52 sont interposés entre les chambres hydrauliques 38 de chaque générateur de pression hydraulique 36 et l'accumulateur 50 constituant les moyens 28 de stockage de l'énergie hydraulique.

Le dispositif de sur-assistance 22 comporte une première conduite 54 de raccordement des moyens de répartition 52 et des moyens de stockage 28 dans laquelle est interposé au moins un premier clapet anti-retour 56 de manière à autoriser uniquement la circulation du fluide hydraulique des moyens de répartition vers les moyens de stockage, c'est-à-dire de la sortie du répartiteur 52 vers l'accumulateur de pression 50.

Le dispositif de sur-assistance 22 comporte une seconde conduite 58 de réalimentation en fluide hydraulique dont une extrémité communique avec un réservoir de réalimentation 60 contenant du fluide hydraulique 62 et dont l'autre extrémité est reliée à la première conduite 54 entre le premier clapet anti-retour 56 et les moyens de répartition 52.

Avantageusement, un deuxième clapet anti-retour 64 est interposé dans la seconde conduite de réalimentation 58 de manière à autoriser uniquement la circulation du fluide hydraulique 62 du réservoir de réalimentation 60 vers le répartiteur 52 et les générateurs de pression 36.

De préférence, le réservoir de réalimentation 60 du dispositif de sur-assistance au freinage 22 est un réservoir indépendant.

En variante, le réservoir de réalimentation 60 est constitué par un réservoir 66 de liquide de frein, généralement associé au maître-cylindre 21, que comporte le circuit de freinage 16 du véhicule. Le fluide hydraulique du dispositif de sur-assistance au freinage 22 est alors constitué par le liquide de frein du circuit de freinage.

De préférence, le dispositif de sur-assistance 22 comporte des moyens de distribution pilotés 68 qui sont destinés à réguler la circulation du fluide hydraulique 62.

Les moyens de distribution 68 comportent au moins une première électrovanne "EV1" et une deuxième électrovanne "EV2".

Le dispositif de sur-assistance 22 comporte une troisième conduite 70 de raccordement des moyens de stockage d'énergie 28 du dispositif de génération de pression hydraulique 26 et les moyens d'actionnement 24.

Plus précisément, l'une des extrémités de la troisième conduite 70 communique avec l'accumulateur 50 des moyens de stockage 28 tandis que l'autre communique avec la chambre de commande 23 du vérin hydraulique 24 par l'intermédiaire d'un premier orifice d'admission OA.

La première électrovanne "EV1" est interposée dans la troisième conduite 70 entre les moyens de stockage 50 du dispositif de sur-assistance 22 et la chambre de commande 23 du vérin d'actionnement 24.

La première électrovanne "EV1" est commandée en ouverture de manière à alimenter en fluide hydraulique 62 la chambre de commande 23 du vérin d'actionnement 24 pour provoquer l'application de l'effort supplémentaire de sur-assistance au freinage F2 sur l'organe de commande 12.

Le dispositif de sur-assistance au freinage 22 comporte une quatrième conduite 72 de raccordement des moyens d'actionnement 24 et du réservoir 60.

Plus précisément, l'une des extrémités de la quatrième conduite 72 communique par un orifice d'échappement OE avec la chambre de commande 23 du vérin d'actionnement 24 et l'autre extrémité communique avec le réservoir de réalimentation 60

La deuxième électrovanne "EV2" est interposée dans la quatrième conduite 72 entre la chambre de commande 23 et le réservoir de réalimentation 60.

La deuxième électrovanne "EV2" est commandée en ouverture de manière à évacuer le fluide hydraulique 62 de la chambre de commande 23 du vérin d'actionnement 24 après l'application d'un effort supplémentaire de sur-assistance au freinage pour rééquilibrer les pressions de fluide hydraulique dans le dispositif de sur-assistance 22.

On décrira ci-après le fonctionnement du dispositif de sur-assistance au freinage 22.

Le dispositif de sur-assistance au freinage 22 est uniquement commandé pour exercer l'effort supplémentaire de sur-assistance F2 sur la pédale 12 que si les conditions déterminées sont remplies, tel ne sera pas le cas lorsque par exemple l'intensité de l'effort de freinage requise est inférieure ou égale à la première intensité (I1) et l'effort principal de freinage F1 exercé par le conducteur sur la pédale 12 est suffisant.

Dans ce cas, le dispositif de sur-assistance au freinage 22 est en mode vielle et la première électrovanne "EV1" et, de préférence, la deuxième électrovanne "EV2" sont fermées de manière à isoler la chambre de commande 23 du vérin d'actionnement 24.

En revanche, lorsque les conditions déterminées sont réunies, le dispositif de sur-assistance au freinage 22 passe en mode actif, la deuxième électrovanne "EV2" est fermée et la première électrovanne "EV1" est ouverte de manière à amener le fluide hydraulique 62 stocké dans l'accumulateur 50 vers la chambre de commande 23 du vérin d'actionnement 24 pour provoquer un déplacement du piston 25 et de la tige de vérin 27.

Le vérin hydraulique 24 est ici monté en rétraction de sorte que l'augmentation de la pression dans la chambre de commande 23 provoque le déplacement rectiligne (de la droite vers la gauche selon la figure unique) du piston 25 et de la tige de vérin 27 qui exerce alors un effort de traction F2 sur la pédale 12 correspondant à l'effort supplémentaire de sur-assistance au freinage.

Après l'application par les freins 18 de l'effort de freinage sur-assisté, la première électrovanne "EV1" est fermée et la deuxième électrovanne "EV2" est ouverte de manière à rétablir la pression initiale du mode vielle dans la chambre de commande 23 du vérin en évacuant le fluide hydraulique 62 vers le réservoir de réalimentation 60.

Avantageusement, le dispositif de sur-assistance 22 comporte une unité électronique de commande "ECU" qui est destinée à piloter l'ouverture et/ou la fermeture de la première électrovanne "EV1" et de la deuxième électrovanne "EV2" selon des conditions de fonctionnement déterminées du système de freinage 10.

Avantageusement, le système de freinage 10 comporte au moins une pompe de précharge 74 qui, au moins lors du démarrage du véhicule, est susceptible d'alimenter en fluide hydraulique 62 l'accumulateur de pression 50 afin d'y stocker une quantité d'énergie hydraulique suffisante pour initialiser le dispositif de sur-assistance 22.

Une telle quantité d'énergie hydraulique est par exemple suffisante si elle permet l'application d'au moins un effort supplémentaire de sur-assistance au freinage et cela de manière à garantir la sécurité du système de freinage 10 du véhicule indépendamment de l'énergie hydraulique susceptible d'être ultérieurement récupérée et stockée par l'intermédiaire des moyens de récupération d'énergie 30 du dispositif de sur-assistance 22.

De préférence, le système de freinage 10 comporte un système d'antiblocage, par exemple de type antiblocage de roues dit "ABS", et/ou un système de régulation du comportement dynamique, par exemple de type contrôle de trajectoire dit "ESP", qui comporte au moins une pompe.

De manière connue, les systèmes d'antiblocage des roues dits "ABS" sont des dispositifs de régulation du système de freinage qui empêchent le blocage des roues au freinage, tout en maintenant la dirigeabilité et la stabilité directionnelle.

Avantageusement, la pompe de précharge 74 des moyens de stockage 28 du dispositif de sur-assistance 22 est constituée par l'une des pompes du système d'antiblocage "ABS" et/ou du système de régulation du comportement dynamique "ESP".

Les moyens de récupération 30 permettent de convertir une partie de l'énergie cinétique du véhicule en énergie hydraulique, l'autre partie étant susceptible d'être dissipée conventionnellement en énergie thermique par les freins 18.

Bien entendu, le circuit de freinage hydraulique n'est donné qu'à titre d'exemple nullement limitatif et les moyens de transmissions de l'effort de freinage sont ainsi susceptibles d'être de type mécanique, pneumatique, hydraulique ou électrique, voire une combinaison hydride.

En variante, le circuit de freinage 16 pourrait être un circuit de type électro-hydraulique, c'est-à-dire du type dans lequel l'effort principal de freinage exercé par le conducteur sur la pédale de frein 12 ne serait pas transmis mécaniquement à un servofrein à dépression 20 puis répercuté sur le maître-cylindre de frein comme cela est le cas pour un circuit de freinage hydraulique conventionnel.

La pédale de frein 12 comporterait alors par exemple au moins un capteur susceptible de fournir à une unité électronique de commande, telle que l'unité "ECU" du système 10, un signal représentatif de la course pédale ou de l'effort de freinage exercé par le conducteur.

Ainsi qu'on l'aura compris, l'effort global de freinage transmis jusqu'aux freins 18 par le circuit de freinage 16 n'est donc pas limité au seul effort F1 susceptible d'être appliqué directement par le conducteur sur la pédale 12.

Avantageusement, l'application par le vérin 24 du dispositif de sur-assistance 22 de l'effort supplémentaire de sur-assistance F2 sur la pédale 12 peut aussi résulter du déclenchement d'un freinage "automatique" par un système de sécurité comportant par exemple des moyens de détection, tels qu'un radar anti-collision, de manière à appliquer l'effort supplémentaire de sur-assistance au freinage F2 pour réaliser un freinage d'urgence et prévenir ainsi un risque d'accident.

## Revendications

1. Système de freinage (10) pour véhicule automobile, du type comportant un organe de commande (12), tel qu'une pédale de frein, sur lequel le conducteur est susceptible d'appliquer un effort de freinage (F1) d'intensité déterminée qui est transmis par l'intermédiaire d'un circuit de freinage (16) aux freins (18), le circuit de freinage (16) comportant des moyens d'assistance (20) susceptibles d'amplifier au moins l'effort de freinage (F1) du conducteur jusqu'à une première intensité (11) correspondant à l'application par les freins (18) d'un effort de freinage assisté de manière à provoquer un ralentissement ou un arrêt du véhicule selon l'intensité de l'effort de freinage, le système de freinage (10) comportant un dispositif (22), dit "de sur-assistance au freinage", comportant des moyens d'actionnement (24) qui, dans des conditions déterminées, sont susceptibles d'exercer un effort supplémentaire de freinage (F2), dit effort de sur-assistance, sur les moyens d'assistance (20) de manière à obtenir par amplification de l'effort de freinage (F1) du conducteur et de l'effort supplémentaire de freinage (F2) une deuxième intensité (12) qui est supérieure à la première intensité (11) d'effort de freinage assisté et qui correspond à l'application par les freins (18) d'un effort de freinage sur-assisté, **caractérisé en ce qu'**un dispositif de génération de pression hydraulique (26) comporte des moyens de génération de pression (29) et des moyens associés de stockage d'énergie (28), tels qu'un accumulateur de pression (50), et **caractérisé en ce que** les moyens de génération de pression (29) sont constitués, au moins en partie, par des moyens de récupération d'énergie (30) qui, lorsqu'un effort de freinage est appliqué par les freins (18), sont destinés à transformer une partie de l'énergie cinétique d'au moins deux des roues (VR, VI) du véhicule en énergie hydraulique susceptible d'être stockée dans les moyens de stockage (28) de manière à être utilisée ultérieurement par le dispositif de sur-assistance au freinage (22).

2. Système de freinage selon la revendication 1, **caractérisé en ce que** les moyens d'actionnement (24) du dispositif de sur-assistance (22) exerce l'effort supplémentaire de freinage (F2) sur les moyens d'assistance (20) par l'intermédiaire l'organe de commande (12) du système (10).

3. Système de freinage selon l'une des revendications 1 ou 2, **caractérisé en ce que** le dispositif de sur-assistance au freinage (22) est de type hydraulique et comporte au moins :
- des moyens d'actionnement constitués par au moins un vérin hydraulique (24) comportant une chambre de commande (23) à volume variable qui est délimitée à l'avant par un piston (25) solidaire d'une tige de vérin (27) dont l'extrémité libre arrière est susceptible d'exercer l'effort supplémentaire de sur-assistance au freinage (F2) sur l'organe de commande (12), et
- un dispositif de génération de pression hydraulique (26) destiné à alimenter sélectivement en fluide hydraulique la chambre de commande (23) du vérin d'actionnement (24).

4. Système de freinage selon la revendication 1, **caractérisé en ce que** les moyens de récupération d'énergie (30) comportent, pour chacune des roues (VR, VI), un générateur de pression hydraulique (36) comportant une chambre hydraulique (38) à volume variable qui est délimitée par la paroi interne d'un cylindre (40) et par la face avant (42) d'un piston (44) dont l'extrémité libre arrière (46) est liée en déplacement à l'étrier de frein (32).

5. Système de freinage selon la revendication 4, **caractérisé en ce que** la chambre (38) du générateur de pression hydraulique (36) communique avec les moyens de stockage (28) de l'énergie hydraulique, tel qu'un accumulateur de pression (50), qui sont destinés à stocker l'énergie hydraulique qui est récupérée, à chaque application d'un effort de freinage, lorsque le piston (44) est déplacé axialement d'une position extrême arrière de repos vers une position extrême avant de travail.

6. Système de freinage selon la revendication 4, **caractérisé en ce que** le dispositif de sur-assistance au freinage (22) comporte des moyens de répartition (52), tel qu'un répartiteur, de l'énergie hydraulique récupérée respectivement sur chacune des roues (VR, VI), qui sont interposés entre les chambres hydrauliques (38) de chaque générateur de pression hydraulique (36) et les moyens de stockage (28, 50) de l'énergie hydraulique.

7. Système de freinage selon la revendication 6, **caractérisé en ce que** le dispositif de sur-assistance (22) comporte une première conduite (54) de raccordement des moyens de répartition (52) et des moyens de stockage (50) dans laquelle est interposé un premier clapet anti-retour (56) de manière à autoriser uniquement la circulation du fluide hydraulique des moyens de répartition (52) vers les moyens de stockage (28, 50).

8. Système de freinage selon la revendication 7, **caractérisé en ce que** le dispositif de sur-assistance (22) comporte une seconde conduite (58) de réalimentation en fluide hydraulique dont une extrémité communique avec un réservoir de réalimentation (60) contenant du fluide hydraulique (62) et dont l'autre extrémité est reliée à la première conduite (54) entre le premier clapet anti-retour (56) et les moyens de répartition (52).

9. Système de freinage selon la revendication 8, **caractérisé en ce que** un deuxième clapet anti-retour (64) est interposé dans la seconde conduite (58) de réalimentation de manière à autoriser uniquement la circulation du fluide hydraulique (62) du réservoir de réalimentation (60) vers les moyens de répartition (52) et de récupération (30).

10. Système de freinage selon l'une des revendications 8 ou 9, **caractérisé en ce que** le dispositif de sur-assistance (22) comporte des moyens de distribution (68) pilotés destinés à réguler la circulation du fluide hydraulique (62) et qui comportent au moins :
- une première électrovanne (EV1) qui est interposée entre les moyens de stockage (50) et le vérin hydraulique (24) et qui est commandée en ouverture de manière à alimenter en fluide hydraulique (62) la chambre de commande (23) du vérin (24) pour provoquer l'application de l'effort supplémentaire de sur-assistance au freinage (F2) sur l'organe de commande (12) ; et
- une deuxième électrovanne (EV2) qui est interposée entre la chambre de commande (23) du vérin (24) et le réservoir de réalimentation (60) et qui est commandée en ouverture de manière à, après l'application d'un effort supplémentaire de sur-assistance au freinage (F2), évacuer le fluide hydraulique (62) de la chambre de commande (23) du vérin (24) et rééquilibrer les pressions de fluide hydraulique (62) dans le dispositif hydraulique de sur-assistance (22).

11. Système de freinage selon la revendication 10, **caractérisé en ce que** le dispositif hydraulique de sur-assistance (22) comporte une unité électronique de commande (ECU) pour piloter, selon des conditions définies, au moins l'ouverture et/ou la fermeture de la première électrovanne (EV1) et de la deuxième électrovanne (EV2).

12. Système de freinage selon l'une quelconque des revendications 3 à 10, **caractérisé en ce que** le dispositif de génération de pression hydraulique (26) comporte au moins une pompe de précharge (74) qui, au moins lors du démarrage du véhicule, est destinée à alimenter en fluide hydraulique (62) les moyens (28, 50) de stockage d'énergie hydraulique de manière à initialiser le dispositif de sur-assistance (22) en y stockant une quantité d'énergie hydraulique suffisante pour permettre l'application d'au moins un effort supplémentaire de sur-assistance au freinage (F2) et à garantir la sécurité de fonctionnement du dispositif de sur-assistance (22) du système de freinage (10) du véhicule indépendamment de l'énergie hydraulique susceptible d'être ultérieurement récupérée et stockée par l'intermédiaire des moyens (30) de récupération d'énergie.

13. Système de freinage selon la revendication 12, **caractérisé en ce qu'**il comporte un système d'antiblocage de roues et/ou un système de régulation du comportement dynamique, comportant au moins une pompe qui constitue la pompe de précharge (74) des moyens de stockage (28, 50) du dispositif de sur-assistance (22).

## Claims

1. Braking system (10) for an automotive vehicle, of the type comprising an actuating member (12), such as a brake pedal, to which the driver can apply a braking force (F1) of determined intensity which is transmitted via a braking circuit (16) to the brakes (18), the braking circuit (16) comprising boost means (20) capable of amplifying at least the braking force (F1) applied by the driver up to a first intensity (I1) corresponding to the application by the brakes (18) of a boosted braking force so as to cause the vehicle to slow down or stop depending on the intensity of the braking force, the braking system (10) comprising a device (22) known as a braking "overboost" device, comprising actuating means (24) which, under determined conditions, are capable of applying an additional braking force (F2), known as the overboost force, to the boost means (20) so as to obtain, by amplifying the braking force (F1) applied by the driver and the additional braking force (F2) a second intensity (I2) which is greater than the first boosted braking force intensity (I1) and which corresponds to the application by the brakes (18) of an overboosted braking force, **characterized in that** a hydraulic-pressure-generating device (26) comprises pressure-generating means (29) and associated energy-storage means (28), such as a pressure accumulator (50), and **characterized in that** the pressure-generating means (29) consist, at least in part, of energy recovery means (30) which, when a braking force is applied by the brakes (18), are intended to convert some of the kinetic energy of at least two of the wheels (VR, VI) of the vehicle into hydraulic energy that can be stored in the storage means (28) for subsequent use by the braking overboost device (22).

2. Braking system according to Claim 1, **characterized in that** the actuating means (24) of the overboost device (22) applies the additional braking force (F2) to the boost means (20) via the operating member (12) of the system (10).

3. Braking system according to one of Claims 1 and 2, **characterized in that** the braking overboost device (22) is of the hydraulic type and comprises at least:
- actuating means consisting of at least one hydraulic cylinder actuator (24) comprising a variable-volume operating chamber (23) which is delimited at the front by a piston (25) secured to a cylinder rod (27) the rear free end of which is able to apply the additional braking overboost force (F2) to the operating member (12), and
- a hydraulic-pressure-generating device (26) intended selectively to supply hydraulic fluid to the operating chamber (23) of the cylinder actuator (24).

4. Braking system according to Claim 1, **characterized in that** the energy recovery means (30) comprise, for each of the wheels (VR, VI), a hydraulic-pressure generator (36) comprising a variable-volume hydraulic chamber (38) which is delimited by the internal wall of a cylinder (40) and by the front face (42) of a piston (44) the rear free end (46) of which moves as one with the brake caliper (32).

5. Braking system according to Claim 4, **characterized in that** the chamber (38) of the hydraulic-pressure generator (36) communicates with hydraulic energy-storage means (28), such as a pressure accumulator (50), which are intended to store the hydraulic energy that is recovered, each time a braking force is applied, when the piston (44) is moved axially from an extreme rear position of rest to an extreme forward work position.

6. Braking system according to Claim 4, **characterized in that** the braking overboost device (22) comprises splitter means (52), such as a splitter, of the hydraulic energy recovered respectively on each of the wheels (VR, VI) which are interposed between the hydraulic chambers (38) of each hydraulic-pressure generator (36) and the hydraulic energy-storage means (28, 50).

7. Braking system according to Claim 6, **characterized in that** the overboost device (22) comprises a first pipe (54) connecting the splitter means (52) and storage means (50) in which pipe there is inserted a first non-return valve (56) so as to allow the hydraulic fluid to circulate only from the splitter means (52) towards the storage means (28, 50).

8. Braking system according to Claim 7, **characterized in that** the overboost device (22) comprises a second pipe (58) for resupplying with hydraulic fluid, one end of this pipe communicating with a resupply reservoir (60) containing hydraulic fluid (62) and the other end being connected to the first pipe (54) between the first non-return valve (56) and the splitter means (52).

9. Braking system according to Claim 8, **characterized in that** a second non-return valve (64) is inserted in the second, resupply, pipe (58) in such a way as to allow the hydraulic fluid (62) to flow only from the resupply reservoir (60) towards the splitter (52) and recovery (30) means.

10. Braking system according to one of Claims 8 and 9, **characterized in that** the overboost device (22) comprises driven distributing means (68) intended to regulate the flow of hydraulic fluid (62) and which comprise at least:
- a first electrically operated valve (EV1) which is interposed between the storage means (50) and the hydraulic cylinder actuator (24) and which is made to open in such a way as to supply hydraulic fluid (62) to the operating chamber (23) of the cylinder actuator (24) in order to cause the additional braking overboost force (F2) to be applied to the operating member (12); and
- a second electrically operated valve (EV2) which is inserted between the operating chamber (23) of the cylinder actuator (24) and the resupply reservoir (60) and which is made to open in such a way that, after an additional braking overboost force (F2) has been applied, the hydraulic fluid (62) is removed from the operating chamber (23) of the cylinder actuator (24) and the equilibrium of the pressures of hydraulic fluid (62) in the hydraulic overboost device (22) is reestablished.

11. Braking system according to Claim 10, **characterized in that** the hydraulic overboost device (22) comprises an electronic control unit (ECU) for driving, according to defined conditions, at least the opening and/or the closing of the first electrically operated valve (EV1) and of the second electrically operated valve (EV2).

12. Braking system according to any one of Claims 3 to 10, **characterized in that** the hydraulic-pressure-generating device (26) comprises at least one prefill pump (74) which, at least when the vehicle is started up, is intended to supply hydraulic fluid (62) to the hydraulic-energy-storage means (28, 50) so as to initialize the overboost device (22) by storing therein enough hydraulic energy to allow at least one additional braking overboost force (F2) to be applied and to guarantee the operational safety of the overboost device (22) of the vehicle braking system (10) irrespective of the hydraulic energy likely subsequently to be recovered and stored by the energy recovery means (30).

13. Braking system according to Claim 12, **characterized in that** it comprises an antilock braking system and/or a system for regulating dynamic stability, comprising at least one pump which constitutes the prefill pump (74) that prefills the storage means (28, 50) of the overboost device (22).

## Patentansprüche

1. Bremssystem (10) für ein Kraftfahrzeug, vom Typ mit einem Steuerorgan (12), wie etwa einem Bremspedal, auf das der Fahrer eine Bremskraft (F1) mit einer vorbestimmten Stärke aufbringen kann, die über einen Bremskreis (16) zu den Bremsen (18) übertragen wird, wobei der Bremskreis (16) Unterstützungsmittel (20) aufweist, die zumindest die Bremskraft (F1) des Fahrers bis zu einer ersten Stärke (I1), die dem Aufbringen einer unterstützten Bremskraft durch die Bremsen (18) entspricht, verstärken können, so dass in Abhängigkeit von der Stärke der Bremskraft eine Verlangsamung oder ein Stillstand des Fahrzeugs bewirkt wird, wobei das Bremssystem (10) eine sogenannte Vorrichtung (22) zur "Zusatzunterstützung der Bremsung" mit Betätigungsmitteln (24) aufweist, die unter vorbestimmten Bedingungen eine zusätzliche Bremskraft (F2), Zusatzunterstützungskraft genannt, auf die Unterstützungsmittel (20) ausüben können, so dass durch die Verstärkung der Bremskraft (F1) des Fahrers und der zusätzlichen Bremskraft (F2) eine zweite Stärke (I2) erhalten wird, die größer ist als die erste Stärke (I1) der unterstützten Bremskraft und dem Aufbringen einer zusätzlich unterstützten Bremskraft durch die Bremsen (18) entspricht, **dadurch gekennzeichnet, dass** eine Vorrichtung (26) zur Erzeugung von hydraulischem Druck Druckerzeugungsmittel (29) und zugeordnete Energiespeichermittel (28), wie etwa einen Druckspeicher (50), aufweist und die Druckerzeugungsmittel (29) zumindest teilweise durch Energierückgewinnungsmittel (30) gebildet sind, die beim Aufbringen einer Bremskraft durch die Bremsen (18) dazu vorgesehen sind, einen Teil der kinetischen Energie von mindestens zwei der Räder (VR, VI) des Fahrzeugs in hydraulische Energie umzuwandeln, die in den Speichermitteln (28) gespeichert werden kann, so dass sie später von der Vorrichtung zur Zusatzbremsunterstützung (22) verwendet werden kann.

2. Bremssystem nach Anspruch 1, **dadurch gekennzeichnet, dass** die Betätigungsmittel (24) der Vorrichtung zur Zusatzunterstützung (22) die zusätzliche Bremskraft (F2) über das Steuerorgan (12) des Systems (10) auf die Unterstützungsmittel (20) ausüben.

3. Bremssystem nach Anspruch 1 oder 2, **dadurch gekennzeichnet, dass** die Vorrichtung zur Zusatzbremsunterstützung (22) eine hydraulische Vorrichtung ist und zumindest Folgendes aufweist:
- Betätigungsmittel, die durch mindestens einen Hydraulikzylinder (24) mit einer Steuerkammer (23) mit variablem Volumen gebildet sind, welche vorne durch einen Kolben (25) begrenzt ist, der mit einer Zylinderstange (27) fest verbunden ist, deren freies hinteres Ende die zusätzliche Kraft zur Zusatzbremsunterstützung (F2) auf das Steuerorgan (12) ausüben kann, und
- eine Vorrichtung (26) zur Erzeugung von hydraulischem Druck, die dazu vorgesehen ist, die Steuerkammer (23) des Betätigungszylinders (24) selektiv mit Hydraulikfluid zu versorgen.

4. Bremssystem nach Anspruch 1, **dadurch gekennzeichnet, dass** die Energierückgewinnungsmittel (30) für jedes Rad (VR, VI) einen Hydraulikdruckgenenerator (36) mit einer Hydraulikkammer (38) mit variablem Volumen aufweisen, welche durch die Innenwand eines Zylinders (40) und durch die Vorderfläche (42) eines Kolbens (44) begrenzt ist, dessen freies hinteres Ende (46) verschiebbar mit dem Bremssattel (32) verbunden ist.

5. Bremssystem nach Anspruch 4, **dadurch gekennzeichnet, dass** die Kammer (38) des Hydraulikdruckgenerators (36) mit den Mitteln (28) zum Speichern der hydraulischen Energie, wie etwa einem Druckspeicher (50), verbunden ist, die dazu vorgesehen sind, die hydraulische Energie zu speichern, die bei jedem Aufbringen einer Bremskraft rückgewonnen wird, wenn der Kolben (44) axial von einer hinteren Ruheendstellung in eine vordere Arbeitsendstellung bewegt wird.

6. Bremssystem nach Anspruch 4, **dadurch gekennzeichnet, dass** die Vorrichtung zur Zusatzbremsunterstützung (22) Mittel (52) zur Aufteilung der rückgewonnenen hydraulischen Energie auf jeweils jedes der Räder (VR, VI), wie etwa einen Verteiler, aufweist, die zwischen den Hydraulikkammern (38) jedes Hydraulikdruckgenerators (36) und den Mitteln (28, 50) zum Speichern der hydraulischen Energie angeordnet sind.

7. Bremssystem nach Anspruch 6, **dadurch gekennzeichnet, dass** die Vorrichtung zur Zusatzunterstützung (22) eine erste Leitung (54) zur Verbindung der Aufteilungsmittel (52) und der Speichermittel (50) aufweist, in der ein erstes Rückschlagventilelement (56) angeordnet ist, so dass nur die Zirkulation des Hydraulikfluids von den Aufteilungsmitteln (52) zu den Speichermitteln (28, 50) gestattet ist.

8. Bremssystem nach Anspruch 7, **dadurch gekennzeichnet, dass** die Vorrichtung zur Zusatzunterstützung (22) eine zweite Leitung (58) zur Nachspeisung mit Hydraulikfluid aufweist, bei der ein Ende mit einem Hydraulikfluid (62) enthaltenden Nachspeisungsbehälter (60) und das andere Ende zwischen dem ersten Rückschlagventilelement (56) und den Aufteilungsmittein (52) mit der ersten Leitung (54) verbunden ist.

9. Bremssystem nach Anspruch 8, **dadurch gekennzeichnet, dass** ein zweites Rückschlagventilelement (64) in der zweiten Leitung (58) zur Nachspeisung angeordnet ist, so dass nur die Zirkulation des Hydraulikfluids (62) von dem Nachspeisungsbehälter (60) zu den Aufteilungsmitteln (52) und den Rückgewinnungsmitteln (30) gestattet ist.

10. Bremssystem nach Anspruch 8 oder 9, **dadurch gekennzeichnet, dass** die Vorrichtung zur Zusatzunterstützung (22) angesteuerte Verteilungsmittel (68) aufweist, die dazu vorgesehen sind, die Zirkulation des Hydraulikfluids (62) zu regulieren und zumindest Folgendes aufweisen:
- ein erstes Magnetventil (EV1), das zwischen den Speichermitteln (50) und dem Hydraulikzylinder (24) angeordnet ist und dessen Öffnen gesteuert wird, so dass die Steuerkammer (23) des Zylinders (24) mit Hydraulikfluid (62) gespeist wird, um das Aufbringen der zusätzlichen Kraft (F2) zur Zusatzbremsunterstützung auf das Steuerorgan (12) zu bewirken, und
- ein zweites Magnetventil (EV2), das zwischen der Steuerkammer (23) des Zylinders (24) und dem Nachspeisungsbehälter (60) angeordnet ist und dessen Öffnen gesteuert wird, so dass nach dem Aufbringen einer zusätzlichen Kraft (F2) zur Zusatzbremsunterstützung das Hydraulikfluid (62) aus der Steuerkammer (23) des Zylinders (24) abgeleitet wird und die Hydraulikfluiddrücke (62) in der hydraulischen Vorrichtung zur Zusatzunterstützung (22) wieder ausgeglichen werden.

11. Bremssystem nach Anspruch 10, **dadurch gekennzeichnet, dass** die hydraulische Vorrichtung zur Zusatzunterstützung (22) eine elektronische Steuereinheit (ECU) aufweist, um unter vorbestimmten Bedingungen zumindest das Öffnen und/oder Schließen des ersten Magnetventils (EV1) und des zweiten Magnetventils (EV2) anzusteuern.

12. Bremssystem nach einem der Ansprüche 3 bis 10, **dadurch gekennzeichnet, dass** die Vorrichtung (26) zur Erzeugung von hydraulischem Druck mindestens eine Vorladepumpe (74) aufweist, die zumindest beim Starten des Fahrzeugs dazu vorgesehen ist, die Mittel (28, 50) zum Speichern von hydraulischer Energie mit Hydraulikfluid (62) zu speisen, so dass die Vorrichtung zur Zusatzunterstützung (22) initialisiert wird, indem eine Menge hydraulischer Energie darin gespeichert wird, die ausreicht, um das Aufbringen mindestens einer zusätzlichen Kraft (F2) zur Zusatzbremsunterstützung zu ermöglichen und die Betriebssicherheit der Vorrichtung zur Zusatzunterstützung (22) des Fahrzeugbremssystems (10) unabhängig von der hydraulischen Energie, die später durch die Energierückgewinnungsmittel (30) rückgewonnen und gespeichert werden kann, zu gewährleisten.

13. Bremssystem nach Anspruch 12, **dadurch gekennzeichnet, dass** es ein Räder-Antiblockiersystem und/oder ein System zur Regulierung des dynamischen Verhaltens mit mindestens einer Pumpe aufweist, die die Pumpe (74) zum Vorladen der Speichermittel (28, 50) der Vorrichtung zur Zusatzunterstützung (22) bildet.
